# EUROPÄISCHE PATENTSCHRIFT

(11) **EP 2 692 053 B1**
(45) Veröffentlichungstag und Bekanntmachung des Hinweises auf die Patenterteilung: **18.12.2019**
(21) Anmeldenummer: 12703997.2
(22) Anmeldetag: 30.01.2012
(51) Int. Cl.: H02P 3/22, B60L 7/06, B60L 3/00, B60L 3/04

(54) **STEUEREINHEIT**
CONTROL UNIT
UNITÉ DE COMMANDE

(30) Priorität: 31.03.2011 DE 102011006512
(43) Veröffentlichungstag der Anmeldung: 05.02.2014
(73) Patentinhaber: Robert Bosch GmbH, 70442 Stuttgart (DE)
(72) Erfinder: SCHOENKNECHT, Andreas, 71272 Renningen (DE)
(86) Internationale Anmeldenummer: PCT/EP2012/051436
(87) Internationale Veröffentlichungsnummer: WO 2012/130498

(56) Entgegenhaltungen:
- DE-A1- 19 835 576
- JP-A- 2010 200 490
- US-A1- 2009 224 706

## Beschreibung

Die vorliegende Erfindung betrifft eine Steuereinheit zum Ansteuern eines elektrischen Verbrauchers, insbesondere einer elektrischen Maschine, mit einem ersten und einem zweiten Spannungsanschluss um die Steuereinheit mit elektrischer Energie zu versorgen, einer Kapazität, die zwischen die Spannungsanschlüsse geschaltet ist, wenigstens einer Halbbrücke, die zwischen die Spannungsanschlüsse geschaltet ist, wobei die Halbbrücke zwei steuerbare Schalter aufweist, zwischen denen ein Halbbrückenabgriff zum Anschließen des Verbrauchers gebildet ist, einer Sicherheitsschaltung, die dazu ausgebildet ist, im Falle einer Störung einen der steuerbaren Schalter der Halbbrücke zu schließen, und einer Entladeschaltung, die dazu ausgebildet ist, im Falle einer Störung die Spannungsanschlüsse elektrisch zu verbinden.

Ferner betrifft die vorliegende Erfindung ein Verfahren zum Einleiten eines Sicherheitsmodus einer Steuereinheit zum Ansteuern eines elektrischen Verbrauchers, insbesondere einer elektrischen Maschine, wobei die Steuereinheit aufweist einen ersten und einen zweiten Spannungsanschluss, um die Steuereinheit mit elektrischer Energie zu versorgen, eine Kapazität, die zwischen die Spannungsanschlüsse geschaltet ist, wenigstens eine Halbbrücke, die zwischen die Spannungsanschlüsse geschaltet ist, wobei die Halbbrücke zwei steuerbare Schalter aufweist, zwischen denen ein Halbbrückenabgriff zum Anschließen des Verbrauchers gebildet ist, mit den Schritten: Erfassen einer Störung, Schließen eines steuerbaren Schalters der Halbbrücke mittels einer Sicherheitsschaltung, und elektrisches Verbinden der Spannungsanschlüsse mittels einer Entladeschaltung.

Schließlich betrifft die vorliegende Erfindung einen Kraftfahrzeugantriebsstrang mit einer elektrischen Maschine zum Bereitstellen von Antriebsleistung, einer Energieversorgungseinheit zum Bereitstellen von elektrischer Energie und einer Steuereinheit der oben beschriebenen Art zum Ansteuern der elektrischen Maschine.

### Stand der Technik

Auf dem Gebiet der Kraftfahrzeugantriebstechnik ist es allgemein bekannt, eine elektrische Maschine als alleinigen Antrieb oder gemeinsam mit einem Antriebsmotor eines anderen Typs (Hybridantrieb) zu verwenden. Zur Ansteuerung derartiger elektrischer Maschinen in einem Kraftfahrzeug dient eine Leistungselektronik, die einen Wechselrichter beinhaltet, der die Gleichspannung/Gleichstrom einer an Bord des Kraftfahrzeugs befindlichen Batterie in einen Wechselstrom umwandelt.

Bekannte Wechselrichter weisen eine Mehrzahl von Schaltelementen auf, mit denen die einzelnen Phasen der elektrischen Maschine mit einem hohen Versorgungsspannungspotential oder mit einem niedrigen Versorgungsspannungspotential verbunden werden. Dabei sind jeweils zwei Schaltelemente zu je einer Halbbrücke in Reihe zusammengeschaltet, wobei zwischen den Schaltelementen ein Halbbrückenabgriff gebildet ist, an dem die jeweilige Phase der elektrischen Maschine angeschlossen wird.

Im Falle einer Störung, z.B. durch einen zu hohen Batteriestrom oder einen zu hohen Zuleitungsstrom, wird der Wechselrichter in einen sicheren Zustand geschaltet, um eine mögliche Schädigung der elektrischen Komponenten zu verhindern. Aus dem Stand der Technik sind im Wesentlichen zwei verschiedene Abschaltverfahren bekannt, die alternativ angewendet werden. Bei dem ersten Verfahren werden einzelne oder sämtliche der steuerbaren Schalter, die mit dem niedrigen Versorgungsspannungspotential verbunden sind (Low-Side-Schalter) geschlossen. Diese Betriebsart wird auch als Kurzschluss-Modus bezeichnet. Bei dem anderen Abschaltverfahren werden die Spannungsanschlüsse des Wechselrichters über einen elektrischen Widerstand miteinander verbunden, um eine Entladung des Zwischenkreiskondensators des Wechselrichters zu bewirken. Eine derartige Entladeschaltung kann wahlweise als dauerhaft eingeschaltete Entladung realisiert sein, die jedoch permanent Energie aus dem Zwischenkreiskondensator in Wärme umsetzt und daher zu einem reduzierten Wirkungsgrad führt, oder aber als zu- bzw. abschaltbare Entladeschaltung ausgebildet sein, die aktiviert werden muss, bspw. wenn ein Öffnen des Traktionsnetzsteckers erkannt wird.

Aus der DE 10 2006 003 254 A1 ist ein Verfahren zum Betreiben einer elektrischen Maschine mit einem Pulswechselrichter im Falle einer Störung bekannt, bei dem die elektrische Maschine im Falle einer Störung zunächst in einen Freischaltmodus und nachfolgend in einen Kurzschlussmodus geschaltet wird.

Nachteilig bei den bekannten Abschaltverfahren ist es, dass die einzelnen Abschaltungen mit unterschiedlichen Auslösekriterien aktiviert werden und somit einen hohen technischen Aufwand und hohe Kosten und Bauraum benötigen.

Aus der Offenlegungsschrift DE 198 35 576 A1 ist außerdem ein Ansteuersystem für einen Elektromotor bekannt, bei welchem eine Brückenschaltung zum Betreiben des Elektromotors vorgesehen ist, wobei Schaltelemente einer jeweiligen Halbbrücke der Brückenschaltung im Falle einer Störung kurzgeschlossen werden können, und wobei eine Ladeschaltung vorgesehen ist, die die Spannungsanschlüsse bei Bedarf miteinander elektrisch verbindet, und wobei ein Befehl zur Erzeugung eines Kurzschlusses für die Schaltelemente auch bewirken kann, dass die Schalteranordnung beziehungsweise die Ladeschaltung leitend geschaltet wird.

Es ist die Aufgabe der vorliegenden Erfindung eine verbesserte Steuereinheit zum Ansteuern eines elektrischen Verbrauchers bereitzustellen, die mit reduziertem technischen Aufwand in einen sicheren Zustand geschaltet werden kann. Es ist ferner die Aufgabe der vorliegenden Erfindung ein entsprechendes Verfahren bereitzustellen.

### Offenbarung der Erfindung

Diese Aufgabe wird durch eine erfindungsgemäße Steuereinheit mit den Merkmalen des Anspruchs 1 dadurch gelöst, dass eine Steuerschaltung bereitgestellt wird, die dazu ausgebildet ist, im Falle der erfassten Störung ein Steuersignal bereitzustellen, das die Sicherheitsschaltung und die Entladeschaltung auslöst.

Ferner wird die obige Aufgabe bei dem eingangs genannten Verfahren mit den Merkmalen des Anspruchs 9 dadurch gelöst, dass die Sicherheitsschaltung und die Entladeschaltung durch ein Signal ausgelöst werden, das von einer Steuerschaltung bereitgestellt wird.

Schließlich wird die obige Aufgabe gelöst durch einen Kraftfahrzeuganstriebsstrang mit den Merkmalen des Anspruchs 10 mit einer elektrischen Maschine zum Bereitstellen von Antriebsleistung, einer Energieversorgungseinheit zum Bereitstellen von elektrischer Energie und einer Steuereinheit der oben genannten Art zum Ansteuern der elektrischen Maschine.

### Vorteile der Erfindung

Durch die vorliegende Erfindung kann eine Abschaltung eines Wechselrichters bereitgestellt werden, die mit einer reduzierten Anzahl von Ansteuerungen realisiert ist, da die eine Steuerschaltung sowohl die Notentladeschaltung als auch die Sicherheitsschaltung ansteuert bzw. auslöst und so auf eine separate Ansteuerung verzichtet werden kann. Dadurch können Kosten und Bauraum der Steuereinheit erheblich reduziert werden.

Vorzugsweise weist die Entladeschaltung einen Widerstand und einen steuerbaren Schalter auf, wobei der Widerstand und der steuerbare Schalter in Reihe zwischen die Spannungsanschlüsse geschaltet sind.

Dadurch kann mit einfachen Mitteln der Zwischenkreiskondensator entladen werden und die gespeicherte Energie in dem Widerstand in Wärme umgesetzt werden.

Es ist weiterhin erfindungsgemäß vorgesehen, dass die Sicherheitsschaltung einen steuerbaren Schalter aufweist, der dazu ausgebildet ist, den ersten Spannungsanschluss mit einem Steuereingang des angeschlossenen steuerbaren Schalters zu verbinden.

Dadurch kann mit einfachen Mitteln der steuerbare Schalter der Halbbrücke geschlossen werden, wobei gleichzeitig die entsprechende Spannung bzw. elektrische Energie zum Ansteuern des Schalters aus dem Traktionsnetz verwendet werden kann, wodurch zusätzlich Energie aus dem Traktionsnetz abgeführt wird.

Es ist weiterhin bevorzugt, wenn die Steuerschaltung dazu ausgebildet ist, die Sicherheitsschaltung und die Entladeschaltung im Wesentlichen gleichzeitig auszulösen.

Dadurch kann der Widerstand der Notentladeschaltung geringer dimensioniert werden, da die Sicherheitsschaltung durch das Ansteu ern des steuerbaren Schalters einen Teil der Energie des Traktionsnetzes entnimmt.

Es ist im Allgemeinen bevorzugt, wenn die Steuereinheit einen Hochspannungsabschnitt und einen Niederspannungsabschnitt aufweist, wobei der Hochspannungsabschnitt eine Versorgungsspannung aufweist, die größer ist als eine Versorgungsspannung des Niederspannungsabschnitts und wobei der Hochspannungsabschnitt von dem Niederspannungsabschnitt galvanisch getrennt ist.

Dadurch können Komponenten der Steuereinheit aus anderen Steuergeräten mit einer niedrigen Versorgungsspannung verwendet werden, ohne dass zusätzliche Spannungswandler benötigt werden.

Dabei ist es bevorzugt, wenn die Steuerschaltung dem Hochspannungsabschnitt zugeordnet ist.

Dadurch kann das Steuersignal der Sicherheitsschaltung und der Entladeschaltung direkt bereitgestellt werden, ohne dass eine galvanische Trennung überwunden werden muss, wodurch die Abschaltgeschwindigkeit nicht verzögert wird.

Es ist weiterhin allgemein bevorzugt, wenn die Steuerschaltung mit Erfassungsmitteln verbunden ist, die dazu ausgebildet sind, wenigstens eine Funktion der Steuereinheit zu überwachen.

Dadurch können eventuelle Fehlfunktionen der Steuereinheit kontinuierlich überwacht werden.

Dabei ist es von besonderem Vorzug, wenn die Steuerschaltung mittels Signalübertragungsmitteln mit Erfassungsmitteln des Niederspannungsabschnitts verbunden ist, wobei die Erfassungsmittel dazu ausgelegt sind, wenigstens eine Funktion des Niederspannungsabschnitts zu überwachen.

Dadurch können auch Fehlfunktionen des Niederspannungsabschnitts der Steuereinheit berücksichtigt werden.

Es ist allgemein bevorzugt, wenn der erste Spannungsanschluss einem hohen Spannungspotential und der zweite Spannungsanschluss einem niedrigen Spannungspotential zugeordnet ist, wobei der von der Sicherheitsschaltung ansteuerbare Schalter mit dem niedrigen Spannungspotential verbunden ist.

Dadurch können eventuell auftretende hohe Induktionsströme schnell und einfach abgeführt werden, wodurch die gesamte Steuereinheit schneller in einem sicheren Zustand gebracht werden können.

Es versteht sich, dass die Merkmale, Eigenschaften und Vorteile der erfindungsgemäßen Steuereinheit auch entsprechend auf das erfindungsgemäße Verfahren zutreffen bzw. anwendbar sind.

Kurze Beschreibung der Zeichnungen
Fig. 1 zeigt in schematischer Form ein Kraftfahrzeug mit einem Hybrid-Antriebsstrang der einen Verbrennungsmotor oder eine elektrische Maschine aufweist; und
Fig. 2 zeigt in schematischer Form ein Schaltbild einer Steuereinheit zum Ansteuern einer elektrischen Maschine mit einer Notentladeschaltung und einer Sicherheitsschaltung.

### Ausführungsformen der Erfindung

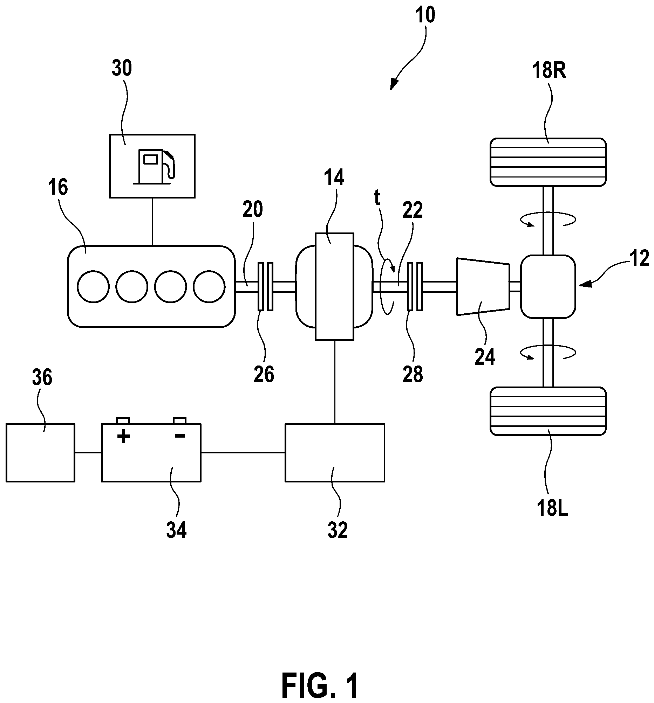

In Fig. 1 ist ein Kraftfahrzeug schematisch dargestellt und allgemein mit 10 bezeichnet. Das Kraftfahrzeug 10 weist einen Antriebsstrang 12 auf, der im vorliegenden Fall eine elektrische Maschine 14 und einen Verbrennungsmotor 16 zur Bereitstellung von Antriebsleistung beinhaltet. Der Antriebsstrang 12 dient zum Antreiben von angetriebenen Rädern 18L, 18R des Fahrzeugs 10.

Der Verbrennungsmotor 16 ist über eine Kurbelwelle 20 mit der elektrischen Maschine 14 verbunden bzw. verbindbar, wobei der Verbrennungsmotor 16 und die elektrische Maschine 14 an einer Abtriebswelle 22 ein Drehmoment t bereitstellen, die mit einer einstellbaren Drehzahl dreht. Die Abtriebswelle 22 ist mit einer Getriebeeinheit 24 verbunden bzw. verbindbar, um das Drehmoment t auf die angetriebenen Räder 18R, 18L zu übertragen. Die Kurbelwelle 20 und die Abtriebswelle 22 weisen im vorliegenden Fall jeweils eine Kupplung 26, 28 auf, um den Verbrennungsmotor 16 mit der elektrischen Maschine 14 bzw. die elektrische Maschine 14 mit der Getriebeeinheit 24 zu verbinden.

Der Antriebsstrang 12 kann dazu eingerichtet sein, das Fahrzeug 10 alleine mittels der elektrischen Maschine 16 anzutreiben (Elektrofahrzeug). Alternativ kann die elektrische Maschine 16 wie in dem vorliegenden Fall Teil eines Hybrid-Antriebsstrangs 12 sein.

Die Kurbelwelle 20 ist mittels der Kupplung 26 mit einem Rotor der elektrischen Maschine 14 verbunden bzw. verbindbar, um eine Drehzahl bzw. ein Drehmoment auf die elektrische Maschine 14 zu übertragen. Der Rotor der elektrischen Maschine 14 ist mit der Abtriebswelle 22 verbunden, um das Drehmoment t auf die Getriebeeinheit 24 zu übertragen. Das Drehmoment t wird dabei durch die Summe der von dem Verbrennungsmotor 16 und der elektrischen Maschine 14 bereitgestellten einzelnen Drehmomente gebildet.

Im motorischen Betrieb erzeugt die elektrische Maschine 14 ein Antriebsmoment, das den Verbrennungsmotor 16, zum Beispiel in einer Beschleunigungsphase, unterstützt. Im generatorischen bzw. Rekuperationsbetrieb erzeugt die elektrische Maschine 14 elektrische Energie, die im Allgemeinen dem Fahrzeug 10 zur Verfügung gestellt wird.

Der Verbrennungsmotor 16 wird durch einen Kraftstofftank 30 mit Kraftstoff versorgt.

Die elektrische Maschine 14 kann ein- oder mehrphasig ausgebildet sein und wird mittels einer Leistungselektronik 32 bzw. eines Inverters 32 angesteuert und mit elektrischer Energie versorgt. Die Leistungselektronik 32 ist mit einer Energieversorgungseinheit 34 wie einer Gleichspannungsversorgung (z.B. Akkumulator bzw. Batterie) 34 des Fahrzeugs 10 verbunden und dient dazu, eine von der Energieversorgungseinheit 34 bereitgestellte Spannung in Wechselstrom im Allgemeinen bzw. in eine Anzahl von Phasenströmen für die Phasen der elektrischen Maschine 14 umzurichten. Die Energieversorgungseinheit 34 ist mit einem Batteriesteuergerät 36 verbunden, das dazu ausgebildet ist, die Energieversorgung der elektrischen Maschine 14 über die Leistungselektronik 32 und den Ladezustand der Energieversorgungseinheit 34 zu steuern. Die Leistungselektronik 32 ist ferner dazu ausgebildet, im Rekuperationsbetrieb der elektrischen Maschine 14, die Energieversorgungseinheit 34 durch die von der elektrischen Maschine 14 erzeugte elektrische Energie aufzuladen.

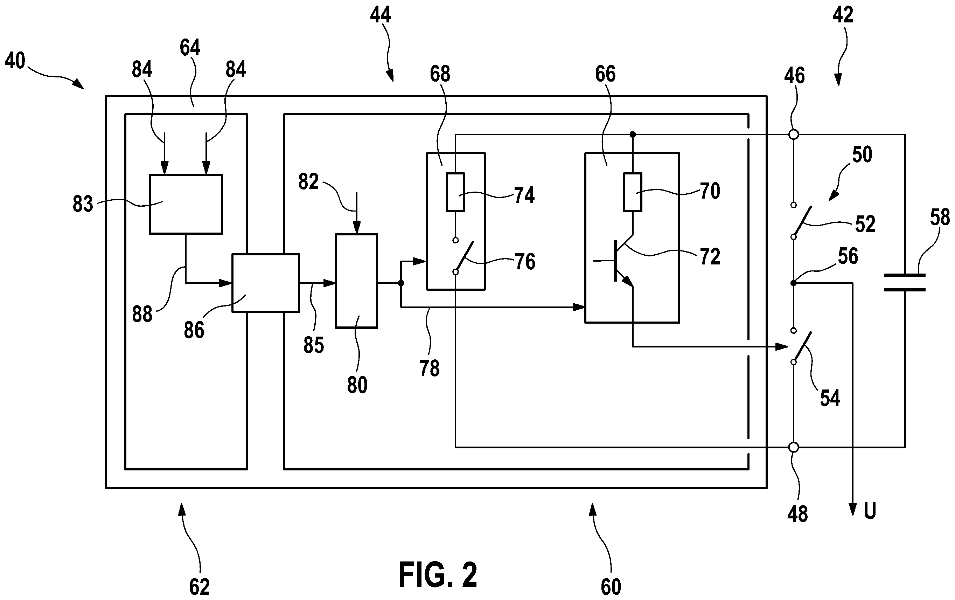

In Fig. 2 ist eine Steuereinheit zum Ansteuern der elektrischen Maschine 14 gezeigt und allgemein mit 40 bezeichnet. Die Steuereinheit weist im Allgemeinen einen Leistungszweig 42 und einen Steuerzweig 44 auf. Der Leistungszweig 42 weist zwei Spannungsanschlüsse 46, 48 auf, um die Steuereinheit 40 mit einer nicht dargestellten Gleichspannungsquelle zu verbinden. Der Leistungszweig 42 weist im Allgemeinen eine Halbbrücke 50 mit zwei steuerbaren Schaltern 52, 54 auf, zwischen denen ein Halbbrückenabgriff 56 gebildet ist zum Anschließen einer Phase U der elektrischen Maschine 14. Parallel zu den Spannungsanschlüssen 46, 48 ist ein Zwischenkreiskondensator 58 angeschlossen.

Der Steuerzweig 44 weist einen Hochspannungsabschnitt 60 und einen Niederspannungsabschnitt 62 auf. Der Hochspannungsabschnitt 60 ist in Bezug auf die Spannungsversorgung im Allgemeinen einen Hochspannungsbordnetz des Kraftfahrzeugs 10 zugeordnet, wobei der Niederspannungsabschnitt 62 im Allgemeinen einem Niederspannungsbordnetz des Kraftfahrzeugs 10 zugeordnet ist. Das Bezugspotential des Niederspannungsabschnitts 62 ist üblicherweise ein Karosseriepotential des Kraftfahrzeugs 10. Der Hochspannungsabschnitt 60 und der Niederspannungsabschnitt 62 sind auf einer Platine 64 realisiert.

Der Hochspannungsabschnitt 60 weist eine Sicherheitsschaltung 66 und eine Entladeschaltung 68 auf, um im Falle einer Störung die Steuereinheit 40 in einen sicheren Zustand zu schalten. Die Sicherheitsschaltung 66 weist einen Widerstand 70 und einen steuerbaren Schalter 72 auf und ist elektrisch verbunden mit dem Spannungsanschluß 46, der auf einem hohen Spannungspotential des Hochspannungsbordnetzes liegt. Die Sicherheitsschaltung 66 ist mit einem Steuereingang des steuerbaren Schalters 54 der Halbbrücke 50 verbunden. Der steuerbare Schalter 54 ist mit einem niedrigen Spannungspotential des Hochspannungsbordnetzes verbunden. Die steuerbaren Schalter 52, 54 sind bei einer Steuerspannung von 0 V in einem gesperrten Zustand und sind bei einer entsprechend positiven Steuerspannung durchgeschaltet. Sofern der steuerbare Schalter 72 der Sicherheitsschaltung 66 geschlossen wird, wird der Steuereingang des steuerbaren Schalters 54 mit dem hohen Spannungspotential des Bordnetzes bzw. mit dem Spannungsanschluß 46 verbunden, wodurch der steuerbare Schalter 54 geschlossen bzw. durchgeschaltet wird. Dadurch wird die Phase U mit dem niedrigen Potential des Hochspannungsbordnetzes verbunden, wodurch z.B. Induktionsströme der elektrischen Maschine 14 schnell und sicher abgeführt werden können. Das Kurzschließen des steuerbaren Schalters 54 wird auch als Not-aktiver Kurschluss bezeichnet. Die steuerbaren Schalter 52, 54 sind vorzugsweise als IGBT oder als MOSFET ausgebildet. Dadurch, dass die steuerbaren Schalter 52, 54 im Falle eines Not-aktiven Kurzschlusses durch die Spannungsversorgung des Hochspannungsbordnetzes geschaltet werden, ist der Not-aktive Kurzschluss auch im Falle eines Ausfalls des Niederspannungsbordnetzes funktionsfähig. Dadurch, dass der Not-aktive Kurzschluss durch das Hochspannungsbordnetz aktiviert und aufrechterhalten wird, wird zusätzliche Energie, aus dem Hochspannungsbordnetz und insbesondere aus dem Zwischenkreiskondensator 58 entnommen, wodurch die Steuereinheit 40 schneller und zuverlässiger in einem sicheren Zustand überführt wird.

Die Entladeschaltung 68 weist einen Widerstand 74 und einen steuerbaren Schalter 76 auf. Die Entladeschaltung ist mit den Spannungsanschlüssen 46, 48 des Leistungszweigs 42 verbunden. Die Entladeschaltung ist dazu ausgebildet, im Falle einer Fehlfunktion der Steuereinheit 40 die Spannungsanschlüsse 46, 48 kurzzuschließen und dadurch, die in dem Zwischenkreiskondensator 58 gespeicherte elektrische Energie in dem Widerstand 74 in Wärme umzusetzen. Dadurch kann auf eine dauerhaft eingeschaltete Entladeschaltung verzichtet werden.

Die Sicherheitsschaltung 66 und die Entladeschaltung 68 werden mittels eines Steuersignals 78 von einer Steuerschaltung 80 bzw. einer Auswerteschaltung 80 angesteuert. Alle Signale des Hochspannungsabschnitts 60, die bspw. durch nicht dargestellte Erfassungsmittel erfasst werden, sind direkt mit der Steuerschaltung 80 verbunden und allgemein mit 82 bezeichnet. Sofern die Steuerschaltung 80 durch die Signale 82 eine Fehlfunktion erfasst, leitet die Steuerschaltung 80 das Steuersignal 78 sowohl an die Sicherheitsschaltung 66 als auch an die Entladeschaltung 68 weiter. Durch das Steuersignal 78 wird sowohl die Sicherheitsschaltung 66 als auch die Entladeschaltung 68 entsprechend aktiviert bzw. ausgelöst. Alternativ zu den Signalen 82 können auch Signale 85 des Niederspannungsabschnitts 62 der Steuerschaltung 80 zugeführt werden und eine entsprechende Fehlfunktion signalisieren. Dazu ist an dem Niederspannungsabschnitt 62 eine Schaltung 83 gebildet, die vorzugsweise als Mikrokontroller ausgebildet ist. Die Schaltung 83 erfasst Signale des Niederspannungsabschnitts, die in Fig. 2 allgemein mit 84 bezeichnet sind. Die Schaltung 83 ist mit einem Signalübertrager 86 verbunden. Der Signalübertrager 86 ist dazu ausgebildet potentialfrei Signale von dem Niederspannungsabschnitt 62 zu dem Hochspannungsabschnitt 60 zu übertragen. Der Signalübertrager 86 kann als Optokoppler ausgebildet sein. Die Schaltung 83 leitet ein entsprechendes Signal 88 an den Signalübertrager 86 weiter, der mit der Steuerschaltung 80 verbunden ist. Sofern eine Fehlfunktion an dem Niederspannungsabschnitt 62 festgestellt wird, leitet die Steuerschaltung 80 das Steuersignal 78 an die Sicherheitsschaltung 66 und die Entladeschaltung 68 weiter, um diese entsprechend zu aktivieren bzw. auszulösen.

Dadurch, dass die Sicherheitsschaltung 66 und die Entladeschaltung 68 durch das eine Steuersignal 78 aktiviert bzw. ausgelöst werden, kann im Allgemeinen auf unterschiedliche separate Ansteuerungen der Sicherheitsschaltung 66 und der Entladeschaltung 68 verzichtet werden. Ferner kann die Entladeschaltung 68 entsprechend geringer dimensioniert werden, da gleichzeitig mit der Aktivierung der Entladeschaltung 68 auch durch den Not-aktiven Kurzschluss Energie aus dem Hochspannungsbordnetz bzw. aus dem Zwischenkreiskondensator 58 entnommen wird und somit weniger elektrische Energie in dem Widerstand 74 in Wärme umgesetzt werden muss. Der technische Aufwand der erfindungsgemäßen Steuereinheit 40 gegenüber dem Stand der Technik ferner reduziert, da bspw. auch auf separate Signalübertrager 86 für die Sicherheitsschaltung 66 und die Entladeschaltung 68 verzichtet werden kann.

## Patentansprüche

1. Steuereinheit (40) zum Ansteuern eines elektrischen Verbrauchers (14), insbesondere einer elektrischen Maschine (14), miteinem ersten und einem zweiten Spannungsanschluss (46,48) um die Steuereinheit (40) mit elektrischer Energie zu versorgen,
- einer Kapazität (58), die zwischen die Spannungsanschlüsse (46 , 48) geschaltet ist,
- wenigstens einer Halbbrücke (50), die zwischen die Spannungsanschlüsse (46,48) geschaltet ist, wobei die Halbbrücke (50) zwei steuerbare Schalter (52,54) aufweist, zwischen denen ein Halbbrückenabgriff (50) zum Anschließen des Verbrauchers (14) gebildet ist,
- einer Sicherheitsschaltung (66), die dazu ausgebildet ist, im Falle einer Störung einen der steuerbaren Schalter (52,54) der Halbbrücke (50) zu schließen, und
- einer Entladeschaltung (68), die dazu ausgebildet ist, im Falle einer Störung die Spannungsanschlüsse (46,48) elektrisch zu verbinden,
wobei eine Steuerschaltung (80) dazu ausgebildet ist, im Falle der erfassten Störung, ein Steuersignal (78) bereitzustellen, das die Sicherheitsschaltung (66) und die Entladeschaltung (68) auslöst, **dadurch gekennzeichnet, dass** die Sicherheitsschaltung (66) einen steuerbaren Schalter (72) aufweist, der dazu ausgebildet ist, den ersten Spannungsanschluss (46) über einen Widerstand (70) mit einem Steuereingang des angeschlossenen steuerbaren Schalters (52,54) zu verbinden.

2. Steuereinheit nach Anspruch 1, **dadurch gekennzeichnet, dass** die Entladeschaltung (68) einen Widerstand (74) und einen steuerbaren Schalter (76) aufweist, wobei der Widerstand (74) und der steuerbare Schalter (76) in Reihe zwischen die Spannungsanschlüsse (46,48) geschaltet sind.

3. Steuereinheit nach Anspruch 1 oder 2, **dadurch gekennzeichnet, dass** die Steuerschaltung (80) dazu ausgebildet ist, die Sicherheitsschaltung (66) und die Entladeschaltung (68) im Wesentlichen gleichzeitig auszulösen.

4. Steuereinheit nach einem der Ansprüche 1 bis 3, **dadurch gekennzeichnet, dass** die Steuereinheit (40) einen Hochspannungsabschnitt (60) und einen Niederspannungsabschnitt (62) aufweist, wobei der Hochspannungsabschnitt (60) eine Versorgungsspannung aufweist, die größer ist als eine Versorgungsspannung des Niederspannungsabschnitts (62) und wobei der Hochspannungsabschnitt (60) von dem Niederspannungsabschnitt (62) galvanisch getrennt ist.

5. Steuereinheit nach Anspruch 4, **dadurch gekennzeichnet, dass** die Steuerschaltung (80) dem Hochspannungsabschnitt (60) zugeordnet ist.

6. Steuereinheit nach einem der Ansprüche 1 bis 5, wobei die Steuerschaltung (80) mit Erfassungsmitteln verbunden ist, die dazu ausgebildet sind, wenigstens eine Funktion der Steuereinheit (40) zu überwachen.

7. Steuereinheit nach Anspruch 5 oder 6, **dadurch gekennzeichnet, dass** die Steuerschaltung (80) mittels Signalübertragungsmitteln (86) mit Erfassungsmitteln des Niederspannungsabschnitts (62) verbunden ist, wobei die Erfassungsmittel dazu ausgelegt sind, wenigstens eine Funktion des Niederspannungsabschnitts (62) zu überwachen.

8. Steuereinheit nach einem der Ansprüche 1 bis 7, **dadurch gekennzeichnet, dass** der erste Spannungsanschluss (46) einem hohen Spannungspotential und der zweite Spannungsanschluss (48) einem niedrigen Spannungspotential zugeordnet ist, wobei der von der Sicherheitsschaltung (80) ansteuerbare Schalter (54) mit dem niedrigen Spannungspotential verbunden ist.

9. Verfahren zum Einleiten eines Sicherheitsmodus einer Steuereinheit (40) zum Ansteuern eines elektrischen Verbrauchers (14), insbesondere einer elektrischen Maschine (14), wobei die Steuereinheit (40) aufweist einen ersten und einen zweiten Spannungsanschluss (46,48) um die Steuereinheit (40) mit elektrischer Energie zu versorgen, eine Kapazität (58), die zwischen die Spannungsanschlüsse (46,48) geschaltet ist, wenigstens eine Halbbrücke (50), die zwischen die Spannungsanschlüsse (46,48) geschaltet ist, wobei die Halbbrücke (50) zwei steuerbare Schalter (52,54) aufweist, zwischen denen ein Halbbrückenabgriff (56) zum Anschließen des Verbrauchers (14) gebildet ist, mit den Schritten:
- Erfassen einer Störung,
- Schließen eines der steuerbaren Schalter (54) der Halbbrücke (50) mittels einer Sicherheitsschaltung (66),
- elektrisches Verbinden der Spannungsanschlüsse (46,48) mittels einer Entladeschaltung (68), wobeidie Sicherheitsschaltung (66) und die Entladeschaltung (68) durch ein Signal (78) ausgelöst werden, das von einer Steuerschaltung (80) bereitgestellt wird, **dadurch gekennzeichnet, dass** die Sicherheitsschaltung (66) einen steuerbaren Schalter (72) aufweist, der geschlossen wird, um den ersten Spannungsanschluss (46) über einem Widerstand (70) mit einem Steuereingang des angeschlossenen steuerbaren Schalters (54) zu verbinden.

10. Kraftfahrzeuganstriebsstrang (12) mit einer elektrischen Maschine (14) zum Bereitstellen von Antriebsleistung, einer Energieversorgungseinheit (34) zum Bereitstellen von elektrischer Energie und einer Steuereinheit (40) nach einem der Ansprüche 1 bis 8 zum Ansteuern der elektrischen Maschine (14).

## Claims

1. Control unit (40) for actuating an electrical consumer (14), in particular an electric machine (14), having a first and a second voltage connection (46, 48) to supply electrical energy to the control unit (40),
- a capacitance (58), which is connected between the voltage connections (46, 48),
- at least one half-bridge (50), which is connected between the voltage connections (46, 48), wherein the half-bridge (50) has two controllable switches (52, 54), between which a half-bridge tap (50) is formed to connect the consumer (14),
- a safety circuit (66), which is designed to close one of the controllable switches (52, 54) of the half-bridge (50) in the event of a fault, and
- a discharge circuit (68), which is designed to electrically connect the voltage connections (46, 48) in the event of a fault,
wherein a control circuit (80) is designed to provide a control signal (78) in the event of a detected fault, said control signal triggering the safety circuit (66) and the discharge circuit (68), **characterized in that** the safety circuit (66) has a controllable switch (72), which is designed to connect the first voltage connection (46) via a resistor (70) to a control input of the connected controllable switch (52, 54).

2. Control unit according to Claim 1, **characterized in that** the discharge circuit (68) has a resistor (74) and a controllable switch (76), wherein the resistor (74) and the controllable switch (76) are connected in series between the voltage connections (46, 48).

3. Control unit according to Claim 1 or 2, **characterized in that** the control circuit (80) is designed to trigger the safety circuit (66) and the discharge circuit (68) substantially at the same time.

4. Control unit according to one of Claims 1 to 3, **characterized in that** the control unit (40) has a high-voltage section (60) and a low-voltage section (62), wherein the high-voltage section (60) has a supply voltage greater than a supply voltage of the low-voltage section (62) and wherein the high-voltage section (60) is DC-isolated from the low-voltage section (62).

5. Control unit according to Claim 4, **characterized in that** the control circuit (80) is assigned to the high-voltage section (60).

6. Control unit according to one of Claims 1 to 5, wherein the control circuit (80) is connected to detection means, which are designed to monitor at least one function of the control unit (40).

7. Control unit according to Claim 5 or 6, **characterized in that** the control circuit (80) is connected to detection means of the low-voltage section (62) by means of signal transmission means (86), wherein the detection means are designed to monitor at least one function of the low-voltage section (62).

8. Control unit according to one of Claims 1 to 7, **characterized in that** the first voltage connection (46) is assigned to a high voltage potential and the second voltage connection (48) is assigned to a low voltage potential, wherein the switch (54) that can be actuated by the safety circuit (80) is connected to the low voltage potential.

9. Method for initiating a safety mode of a control unit (40) for actuating an electrical consumer (14), in particular an electric machine (14), wherein the control unit (40) has a first and a second voltage connection (46, 48) to supply electrical energy to the control unit (40), a capacitance (58), which is connected between the voltage connections (46, 48), at least one half-bridge (50), which is connected between the voltage connections (46, 48), wherein the half-bridge (50) has two controllable switches (52, 54), between which a half-bridge tap (56) is formed to connect the consumer (14), comprising the following steps:
- detecting a fault,
- closing one of the controllable switches (54) of the half-bridge (50) by means of a safety circuit (66),
- electrically connecting the voltage connections (46, 48) by means of a discharge circuit (68), wherein the safety circuit (66) and the discharge circuit (68) are triggered by way of a signal (78), which is provided by a control circuit (80), **characterized in that** the safety circuit (66) has a controllable switch (72), which is closed in order to connect the first voltage connection (46) via a resistor (70) to a control input of the connected controllable switch (54).

10. Motor vehicle drive train (12) having an electric machine (14) for providing drive power, an energy supply unit (34) for providing electrical energy and a control unit (40) according to one of Claims 1 to 8 for actuating the electric machine (14).

## Revendications

1. Unité de commande (40) pour commander un consommateur électrique (14), en particulier une machine électrique (14), comprenant des première et seconde bornes de tension (46, 48) pour l'alimentation en énergie électrique de l'unité de commande (40),
- un condensateur (58) monté entre les bornes de tension (46, 48),
- au moins un demi-pont (50) monté entre les bornes de tension (46, 48), le demi-pont (50) présentant deux commutateurs commandés (52, 54) entre lesquels est formé un point de connexion de demi-pont (50) pour le raccordement du consommateur (14),
- un circuit de sécurité (66) conçu pour fermer l'un des commutateurs commandés (52, 54) du demi-pont (50) en cas de défaut, et
- un circuit de décharge (68) conçu pour raccorder électriquement les bornes de tension (46, 48) en cas de défaut,
dans laquelle un circuit de commande (80) est conçu pour fournir un signal de commande (78) en cas de défaut détecté qui déclenche le circuit de sécurité (66) et le circuit de décharge (68),
**caractérisée en ce que** le circuit de sécurité (66) comprend un commutateur commandé (72) conçu pour raccorder la première borne de tension (46) par l'intermédiaire d'une résistance (70) à une entrée de commande du commutateur commandé (52, 54) connecté.

2. Unité de commande selon la revendication 1, **caractérisée en ce que** le circuit de décharge (68) comporte une résistance (74) et un commutateur commandé (76), dans laquelle la résistance (74) et le commutateur commandé (76) sont montés en série entre les bornes de tension (46, 48).

3. Unité de commande selon la revendication 1 ou 2, **caractérisée en ce que** le circuit de commande (80) est conçu pour déclencher de manière sensiblement simultanée le circuit de sécurité (66) et le circuit de décharge (68) .

4. Unité de commande selon l'une des revendications 1 à 3, **caractérisée en ce que** l'unité de commande (40) comprend une partie à haute tension (60) et une partie à basse tension (62),
dans laquelle la partie à haute tension (60) présente une tension d'alimentation supérieure à une tension d'alimentation de la partie à basse tension (62) et dans laquelle la partie à haute tension (60) est séparée galvaniquement de la partie à basse tension (62).

5. Unité de commande selon la revendication 4, **caractérisée en ce que** le circuit de commande (80) est associé à la partie à haute tension (60).

6. Unité de commande selon l'une des revendications 1 à 5, dans laquelle le circuit de commande (80) est relié à des moyens de détection conçus pour surveiller au moins une fonction de l'unité de commande (40).

7. Unité de commande selon la revendication 5 ou 6, **caractérisée en ce que** le circuit de commande (80) est relié par des moyens de transmission de signaux (86) à des moyens de détection de la partie à basse tension (62), dans laquelle les moyens de détection sont conçus pour surveiller au moins une fonction de la partie à basse tension (62).

8. Unité de commande selon l'une des revendications 1 à 7, **caractérisée en ce que** la première borne de tension (46) est associée à un potentiel à haute tension et la deuxième borne de tension (48) est associée à un potentiel à basse tension, dans laquelle le commutateur (54) commandé par le circuit de sécurité (80) est relié au potentiel à basse tension.

9. Procédé pour déclencher un mode de sécurité d'une unité de commande (40) destinée à commander un consommateur électrique (14), en particulier une machine électrique (14), dans lequel l'unité de commande (40) comporte des première et seconde bornes de tension (46, 48) pour l'alimentation en énergie électrique de l'unité de commande (40), un condensateur (58) monté entre les bornes de tension (46, 48), au moins un demi-pont (50) monté entre les bornes de tension (46, 48), le demi-pont (50) présentant deux commutateurs commandés (52, 54) entre lesquels est formé un point de connexion de demi-pont (56) pour le raccordement du consommateur (14), et comportant les étapes suivantes :
- la détection d'un défaut,
- la fermeture de l'un des commutateurs commandés (54) du demi-pont (50) au moyen d'un circuit de sécurité (66),
- le raccordement électrique des bornes de tension (46, 48) au moyen d'un circuit de décharge (68), dans lequel le circuit de sécurité (66) et le circuit de décharge (68) sont déclenchés par un signal (78) fourni par un circuit de commande (80),
**caractérisé en ce que** le circuit de sécurité (66) comprend un commutateur commandé (72) qui est fermé pour raccorder la première borne de tension (46) par l'intermédiaire d'une résistance (70) à une entrée de commande du commutateur commandé (54) connecté.

10. Chaîne cinématique de véhicule automobile (12) comportant une machine électrique (14) destinée à fournir une puissance motrice, une unité d'alimentation en énergie électrique (34) destinée à fournir de l'énergie électrique et une unité de commande (40) selon l'une des revendications 1 à 8 pour commander la machine électrique (14) .
